# EUROPÄISCHE PATENTSCHRIFT

(11) **EP 1 417 032 B1**
(45) Veröffentlichungstag und Bekanntmachung des Hinweises auf die Patenterteilung: **25.05.2011**
(21) Anmeldenummer: 02750752.4
(22) Anmeldetag: 14.08.2002
(51) Int. Cl.: B01L 3/00, B29C 45/00, B29C 65/00, B29C 65/70, B29C 65/76, B29C 45/16

(54) **VERFAHREN ZUR HERSTELLUNG EINER VERSCHLUSSMATTE SOWIE NACH DIESEM VERFAHREN HERGESTELLTE VERSCHLUSSMATTE**
METHOD FOR THE PRODUCTION OF A SEALING COVER AND SEALING COVER PRODUCED BY SAID METHOD
PROCEDE DE FABRICATION D'UNE COUVERTURE DE FERMETURE ET COUVERTURE DE FERMETURE AINSI FABRIQUEE

(30) Priorität: 16.08.2001 CH 150701
(43) Veröffentlichungstag der Anmeldung: 12.05.2004
(73) Patentinhaber: Weidmann Plastics Technology AG, 8640 Rapperswil (CH)
(72) Erfinder: BÜTTGEN, Heinz, D-79189 Bad Krozingen (DE); OWEGESER, Heidi, CH-8853 Lachen (CH); CALLENBACH, Tilo, CH-8645 Jona (CH)
(74) Vertreter: Groner, Manfred
(86) Internationale Anmeldenummer: PCT/CH2002/000445
(87) Internationale Veröffentlichungsnummer: WO 2003/015918

(56) Entgegenhaltungen:
- WO-A-01/17682
- WO-A-87/01329
- US-A- 4 599 314
- US-A- 5 282 543

## Beschreibung

Die Erfindung betrifft ein Verfahren zur Herstellung einer Verschlussmatte, die einen flächigen Träger aufweist, an dem eine Mehrzahl von Verschlusselementen angeordnet sind, die zum Verschliessen von wenigstens einem Probenbehälter vorgesehen sind.

Die US 5,282,543 offenbart eine Verschlussmatte, die aus einem flächigen Träger besteht, an der eine Mehrzahl von Verschlusselementen angeformt sind. Der Träger und die Verschlusselemente bestehen aus dem gleichen oder aus unterschiedlichen Kunststoffen. Mit dieser Verschlussmatte werden Reaktionsbehälter verschlossen, die in einem sogenannten Rack gelagert sind. Sie ermöglicht das Verschliessen von mehreren, beispielsweise 48 oder 96 Testbehälter in einem Arbeitsgang. Ebenfalls können diese Behälter durch Abziehen der Verschlussmatte vergleichsweise schnell und einfach geöffnet werden.

Die WO 01/17682 offenbart eine Verschlussmatte, bei welcher der flächige Träger lösbar mit den Verschlusselementen verbunden ist. Die ebenfalls in einem Rack angeordneten Testbehälter werden mit der Verschlussmatte verschlossen. Der flächige Träger kann von den Testbehältern abgezogen werden, wobei die Verschlusselemente auf den Testbehältern verbleiben und diese verschliessen. Dieser Träger wird durch eine gestanzte Folie aus einem Duroplasten gebildet. Die Verschlusselemente sind jeweils mechanisch mit dem flächigen Träger verbunden. Dazu weisen die Verschlusselemente jeweils an einem oberen Rand eine äussere und umlaufende Nut auf, in welche der flächige Träger eingreift. Die Herstellung dieser Verschlussmatte ist vergleichsweise aufwendig. Zuerst muss der flächige Träger hergestellt und gestanzt werden. Anschliessend muss der flächige Träger in eine Spritzgiessmaschine eingelegt und die Verschlusselemente müssen an diesen flächigen Träger angespritzt werden.

Der Erfindung liegt die Aufgabe zugrunde, ein Verfahren zu schaffen, mit dem Verschlussmatten kostengünstiger und in hohen Stückzahlen hergestellt werden können. Die nach dem Verfahren hergestellten Verschlussmatten sollen funktions- und transportsicher sein und insbesondere ein sicheres Abziehen des flächigen Trägers ermöglichen.

Die Aufgabe ist gemäss Anspruch 1 gelöst. Beim erfindungsgemässen Verfahren werden zwischen dem flächigen Träger und den Verschlusselementen während des Spritzgiessvorganges Verbindungen geschaffen, die nicht mechanisch sind, sondern auf einer Adhäsionskraft beruhen. Diese adhäsive Verbindungsfestigkeit lässt sich sehr präzise und in einem weiten Bereich einstellen, indem für die Verschlusselemente und den flächigen Träger Kunststoffe verwendet werden, welche beide eine ausreichende Benetzung zeigen. Je besser die Annäherung der Moleküle beider Verbindungspartner, umso höher ist die Verbindung zwischen dem flächigen Träger und den Verschlusselementen. Die Haftkraft zwischen jeweils einem Verschlusselement und dem flächigen Träger kann auf die Haltekraft der Verschlusselemente auf den Probenbehältern genau eingestellt werden, sodass beim Abziehen des flächigen Trägers die Verschlusselemente sicher in den Probenbehältern verbleiben und diese dicht verschliessen. Es kann damit vermieden werden, dass beim Abziehen des flächigen Trägers einzelne Verschlusselemente aus den Probenbehältern abgezogen werden.

Ein wesentlicher Vorteil des erfindungsgemässen Verfahrens wird darin gesehen, dass die Haftkraft zwischen dem flächigen Träger und den Verschlusselementen so erhöht werden kann, dass eine feste Verbindung besteht und somit eine Ausführung mit nicht lösbaren flächigen Trägern herstellbar ist. Hierbei kann die gleiche Spritzgiessmaschine verwendet werden. Geändert werden müssen lediglich die einzuspritzenden Kunststoffe, die auch gleich sein können. In diesem Fall muss dann lediglich ein Kunststoff eingespritzt werden und die so hergestellte Verschlussmatte ist einstückig aus dem gleichen Kunststoff hergestellt. Die Umstellung in der Produktion zwischen Verschlussmatten mit lösbaren Verschlusselementen und solchen mit unlösbaren Verschlusselementen ist damit sehr einfach.

Die Erfindung betrifft zudem eine nach diesem Verfahren hergestellte Verschlussmatte gemäß Anspruch 12 . Bei dieser weisen die Verschlusselemente jeweils an einem oberen Rand eine flächige Verbindungsstelle auf, an welcher die Verschlusselemente jeweils durch Adhäsionskraft lösbar mit dem flächigen Träger verbunden sind. Diese Verbindungsstelle wird nach einer Weiterbildung der Erfindung durch einen radial nach aussen gerichteten Flansch gebildet. Vorzugsweise befindet sich die Verbindungsstelle an der Oberseite dieses Flansches.

Nach dem Abziehen des flächigen Trägers können die Verschlusselemente einzeln aus den Probenbehältern entfernt werden. Dies kann maschinell, dann besonders einfach erfolgen, wenn die Verschlusselemente innenseitig am Boden einen angeformten Nocken aufweisen, der mit einem geeigneten Instrument gefasst werden kann.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Fig. 1: schematisch ein Schnitt durch einen Teil der erfindungs- gemässen Verschlussmatte,
- Fig. 2: schematisch das Abziehen des flächigen Trägers von einem Verschlusselement,
- Fig. 3: schematisch ein Schnitt durch einen Teil der erfindungs- gemässen Verschlussmatte,
- Fig. 4: schematisch ein Schnitt durch einen Teil eines Racks mit eingesetzten und verschlossenen Probenbehältern,
- Fig. 5: schematisch ein Schnitt durch einen Teil eines Formwerk- zeuges und
- Fig. 6: ein Schnitt gemäss Fig. 5, aber nach dem Spritzen der Verschlusselemente und vor dem Spritzen des flächigen Trägers.

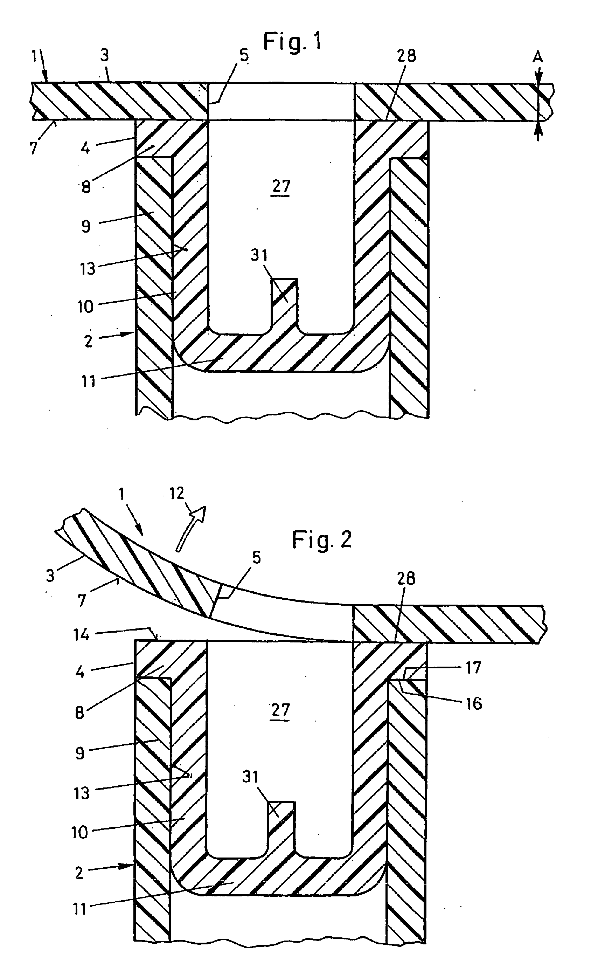

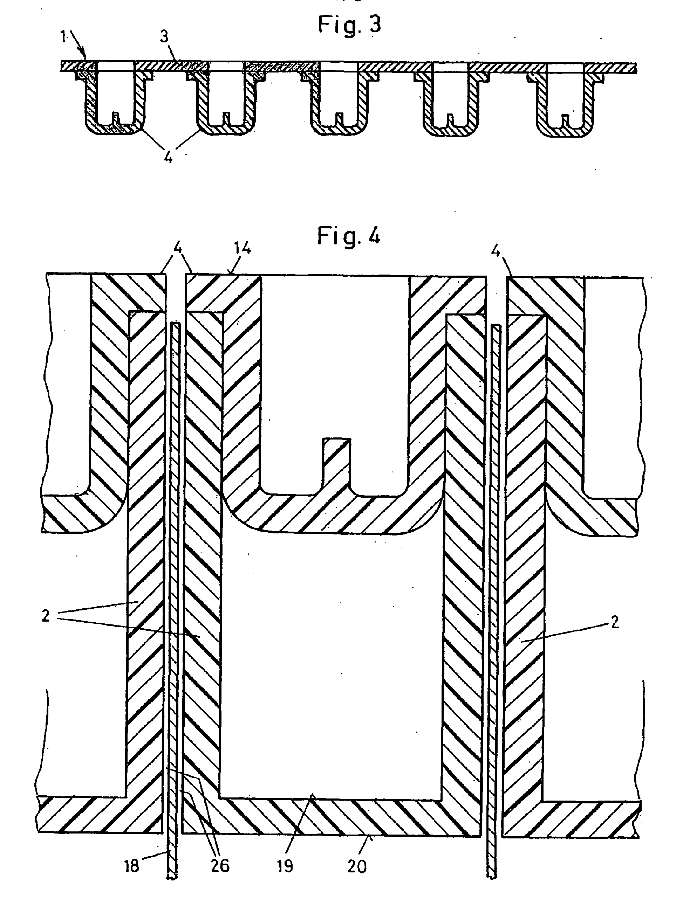

Die in Fig. 1 gezeigte Verschlussmatte 1 weist einen flächigen Träger 3 auf, der aus einem flexiblen Kunststoff hergestellt ist und der eine Stärke A von etwa 1 mm oder mehr aufweist. An einer Unterseite 7 des Trägers 3 sind gemäss Fig. 3 eine Mehrzahl von zapfenförmigen Verschlusselementen 4 befestigt. Die Anzahl dieser in regelmässigen Reihen angeordneten Verschlusselemente 4 beträgt beispielsweise 16, 48 oder 96. Grundsätzlich sind hier aber auch mehr oder weniger solche Verschlusselemente 4 denkbar. Die Verschlussmatte 1 mit den Verschlusselementen 4 dient zum Verschliessen von Probenbehältern 2, die in einem in Fig. 4 angedeuteten sogenannten Rack 18 angeordnet sind und eine Bodeninnenseite 19, eine Bodenaussenseite 20 und eine zylindrische Wandung 9 mit einer Innenseite 13 aufweisen. Dieses Rack 18 weist eine entsprechende Anzahl von durchgehenden Öffnungen 26 auf, die im Querschnitt in der Regel quadratisch sind und die jeweils einen Probenbehälter 2 aufnehmen. Diese Probenbehälter 2 können in bekannter Weise in einer Füllposition und in einer Lagerposition im Rack 18 fixiert werden. Ebenfalls weisen diese Probenbehälter 2 einen Code zur Probenidentifizierung auf. Es wird hierzu auf die EP 0 904 841 A2 (F. Hoffmann - La Roche AG) verwiesen, in welcher eine Vorrichtung zur Handhabung solcher Racks und Probenbehälter beschrieben ist.

Die Verschlusselemente 4 sind gemäss Fig. 1 im Querschnitt etwa U-förmig und weisen jeweils eine kreiszylindrische Wandung 10 sowie einen Boden 11 auf. In der Nähe des Bodens 11 ist aussenseitig an der Wandung 10 eine umlaufende Dichtwulst 8 angeformt, die in der Wandung des Probenbehälters 2 abdichtet. An der Oberseite des Bodens 11 ist ein nach oben ragender Nocken 31 angeformt, der wie weiter unten erläutert, zum maschinellen Entfernen des entsprechenden Verschlusselementes 4 dient. Am oberen Rand des Verschlussbehälters 4 ist der radial nach aussen ragende Dichtwulst 8 angeformt, der eine ringförmige Oberseite 14 sowie eine parallel dazu verlaufende Unterseite 16 aufweist. Bei verschlossenem Probenbehälter 2 liegt diese Unterseite 16 auf einer ebenfalls ringförmigen Stirnseite 17 des Probenbehälters 2 auf.

Über der Öffnung 27 ist im flächigen Träger 3 eine entsprechende Öffnung 5 angeordnet. Die ringförmige ebene Fläche 14 bildet mit einer entsprechenden Fläche der Unterseite 7 des flächigen Trägers 3 eine Verbindungsstelle 28, die durch Abziehen des flächigen Trägers 3 gelöst werden kann, wie in Fig. 2 gezeigt ist. Die Haftkraft dieser Verbindungsstelle 28 ist kleiner als die Haltekraft des Verschlusselementes 4 im Probenbehälter 2. Der flächige Träger 3 kann somit gemäss Fig. 2 in Richtung des Pfeiles 12 abgezogen werden, ohne das Verschlusselement 4 aus dem Probenbehälter 2 zu entfernen. Nach dem Abziehen des flächigen Trägers 3 verbleiben somit die Verschlusselemente 4 dicht auf den entsprechenden Probenbehältern 2. Die Verbindungsstellen 28 entstehen beim Anspritzen des flächigen Trägers 3 an den Verschlusselementen 4, wie sich aus dem nachfolgend beschriebenen Verfahren ergibt.

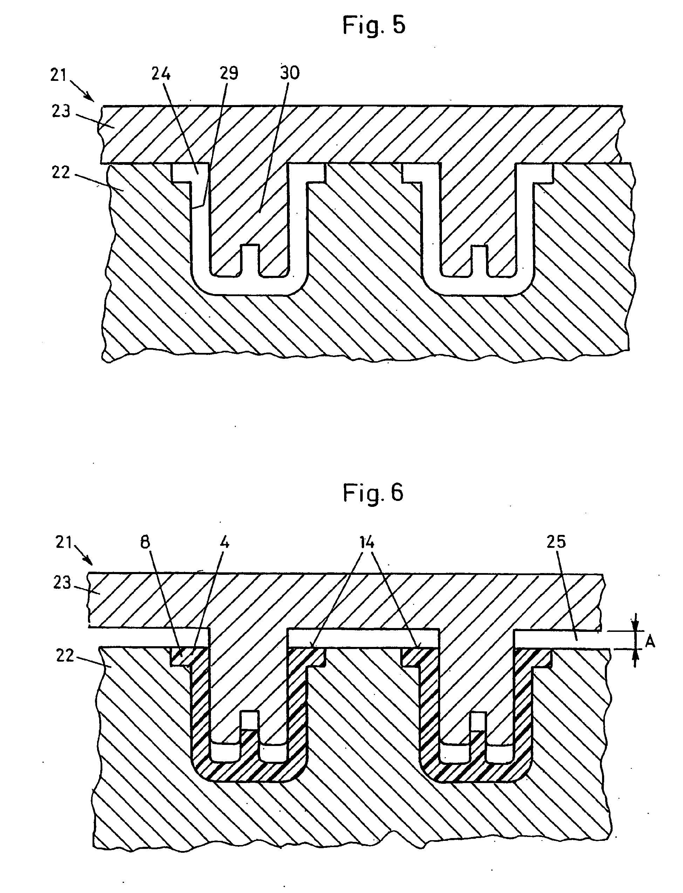

Zur Herstellung der Verschlussmatte 1 wird das in den Fig. 5 und 6 lediglich angedeutete Spritzgusswerkzeug 21 verwendet. Dieses weist zwei Formteile 22 und 23 sowie zwei hier nicht gezeigte an sich bekannte Spritzgussaggregate auf. Der Formteil 23 weist Ansätze 30 auf, die jeweils mit dem Formteil 22 einen Zwischenraum 24 bilden, in dem ein Verschlusselement gespritzt wird. Der zum Spritzen der Verschlusselemente verwendete Kunststoff ist vorzugsweise Polypropylen, Polyethylen oder (EVA) EthylenVinylacetat-Copolymer.

Nach dem Spritzen der Verschlusselemente 4 wird der Formteil 23 vom Formteil 22 so angehoben, dass ein Zwischenraum 25 mit der Stärke A gebildet wird. In diesen Zwischenraum 25 wird mit einem hier nicht gezeigten zweiten Spritzgussaggregat Kunststoff eingespritzt. Dieser Kunststoff ist ein thermoplastischer Elastomer, beispielsweise SEBS oder SBS oder ein Silikongummi. Wie die Fig. 6 zeigt, sind die Flächen 14 der Flansche 8 diesem Zwischenraum 25 zugewendet. Beim Einspritzen von Kunststoff in den Zwischenraum 25 wird dieser Kunststoff somit an die Flansche 8 im Bereich der Flächen 14 angespritzt. Zeigen die beiden Kunststoffe, die mit den Spritzgussaggregaten eingespritzt werden eine gute Benetzbarkeit, so bildet sich an den Flächen 14 jeweils die oben erwähnte Verbindungsstelle 28, deren Haftkraft von der Benetzung der gewählten Kunststoffen und der Annäherung der Moleküle beider Verbindungspartnern abhängig ist. Ist die Benetzung und Annäherung der Moleküle zwischen diesen beiden Kunststoffen gross, so ist entsprechend diese Haftkraft gross. Im Grenzfall, bei dem die beiden Kunststoffe gleich sind, wird der flächige Träger an die Verschlusselemente 4 angeformt und in diesem Fall ist der flächige Träger 3 von den Verschlusselementen 4 nicht mehr lösbar. Ist die Benetzung und Annäherung der Moleküle der beiden Kunststoffe vergleichsweise gross, so ist entsprechend die Haftkraft der Verbindungsstelle 28 gross. Durch entsprechende Wahl der beiden Kunststoffe ist somit im wesentlichen jede beliebige Haftkraft erreichbar. In der Praxis wird diese Haftkraft so gewählt, dass die Verschlusselemente 4 zum Aufbringen auf die Probenbehälter 2 sicher am flächigen Träger 1 halten, gleichzeitig aber der flächige Träger 3, wie oben erläutert, abgezogen werden kann. Bei einem bevorzugten Ausführungsbeispiel ist der Träger 3 aus SEBS oder SBS hergestellt und die Verschlusselemente 4 sind aus EVA hergestellt. Denkbar sind aber auch andere Kombinationen von Kunststoffen. Wesentlich ist jedoch, dass sowohl der Träger 3 als auch die Verschlusselemente 4 aus einem gummielastischen Kunststoff hergestellt sind. Durch entsprechende Wahl der beiden Kunststoffe kann somit wahlweise eine Verschlussmatte 1 mit abziehbarem flächigen Träger 3 oder eine Verschlussmatte gebildet werden, bei welcher die Verschlusselemente 4 fest mit dem Träger 3 verbunden sind.

Sind die Verschlusselemente 4 lösbar am Träger 3 befestigt, so kann der flächige Träger 3, wie oben erläutert, von den Verschlusselementen 4 abgezogen werden. Die Probenbehälter sind somit einzeln mit jeweils einem Verschusselement 4 dicht verschlossen. In der geeigneten Lagerposition können diese Probenbehälter 2 gelagert und bei Bedarf einzeln geöffnet werden. Dazu werden die Verschlusselemente 4 jeweils mit einem hier nicht gezeigten Instrument am Nocken 26 gefasst und nach oben aus dem entsprechenden Probenbehälter 2 herausgezogen. Die Haltekraft der Verschlusselemente 4 in den Probenbehältern 2, insbesondere durch die Haftung an der Innenseite 13, ist jeweils so gewählt, dass sie kleiner ist als die Haltekraft der Probenbehälter 2 im Rack 18. Beim Herausziehen der Verschlusselemente 4 aus den Probenbehältern 2 verbleiben diese somit im Rack 18. Die Haftkraft der Verbindungsstelle 28, die Haltekraft der Verschlusselemente 4 sowie die Haltekraft der Probenbehälter 2 im Rack 18 sind somit aufeinander abgestimmt. Die Haftkraft 28 kann, wie oben erwähnt, durch die Wahl der Kunststoffe im wesentlichen stufenlos und genau eingestellt werden.

## Patentansprüche

1. Verfahren zur Herstellung einer Verschlussmatte (1), die einen flächigen Träger (3) aufweist, an dem eine Mehrzahl von Verschlusselementen (4) angeordnet sind, die zum Verschliessen von jeweils einem Probenbehälter (2) vorgesehen sind, **dadurch gekennzeichnet, dass** der flächige Träger (3) und die Verschlusselemente (4) aus unterschiedlichen Werkstoffen in demselben Spritzgiesswerkzeug (21) durch Zweikomponenten - Spritzgiessen hergestellt werden und der flächige Träger (3) hiermit mit den Verschlusselementen (4) durch Adhäsion lösbar verbunden werden.

2. Verfahren nach Anspruch 1, **dadurch gekennzeichnet, dass** der flächige Träger (3) und die Verschlusselemente (4) aus artverwandten Kunststoffen hergestellt werden.

3. Verfahren nach Anspruch 1 oder 2, **dadurch gekennzeichnet, dass** die Verschlusselemente jeweils an einem oberen Rand einen nach aussen ragenden Flansch (8) aufweisen, an dem der flächige Träger (3) angespritzt ist.

4. Verfahren nach Anspruch 3, **dadurch gekennzeichnet, dass** der Flansch (8) eine obere Fläche (14) aufweist, an welcher der flächige Träger (3) angespritzt ist.

5. Verfahren nach einem der Ansprüche 1 bis 4, **dadurch gekennzeichnet, dass** der flächige Träger (3) aus einem thermoplastischen Elastomer hergestellt ist.

6. Verfahren nach einem der Ansprüche 1 bis 4, **dadurch gekennzeichnet, dass** der flächige Träger (3) aus Silikongummi hergestellt ist.

7. Verfahren nach einem der Ansprüche 1 bis 4, **dadurch gekennzeichnet, dass** der flächige Träger (3) aus SEBS oder SBS hergestellt ist.

8. Verfahren nach einem der Ansprüche 1 bis 4, **dadurch gekennzeichnet, dass** die Verschlusselemente (4) aus Polypropylen oder Polyethylen hergestellt sind.

9. Verfahren nach einem der Ansprüche 1 bis 7, **dadurch gekennzeichnet, dass** die Verschlusselemente (4) aus EVA hergestellt sind.

10. Verfahren nach einem der Ansprüche 1 bis 9, **dadurch gekennzeichnet, dass** die Verbindungsfestigkeit zwischen dem flächigen Träger (3) und einem der Verschlusselemente (4) wesentlich grösser ist als die Haltekraft eines Verschlusselementes (4) in einem Probenbehälter (2).

11. Verfahren nach einem der Ansprüche 1 bis 10, **dadurch gekennzeichnet, dass** zuerst die Verschlusselemente (4) und anschliessend der flächige Träger (3) gespritzt werden.

12. Verschlussmatte, hergestellt nach dem Verfahren gemäss Anspruch 1, **dadurch gekennzeichnet, dass** die durch Spritzgiessen hergestellten und am flächigen Träger (3) angespritzten Verschlusselemente (4) jeweils an einem oberen Rand eine flächige Verbindungsstelle (28) aufweisen, an welcher das Verschlusselement (4) durch Adhäsion lösbar mit dem flächigen und durch Spritzgiessen hergestellten Träger (3) verbunden ist und dass die Verbindungen zwischen dem flächigen Träger (3) und den Verschlusselementen (4) jeweils lediglich auf der Adhäsionskraft der flächigen Verbindungsstelle (28) beruhen.

13. Verschlussmatte nach Anspruch 12, **dadurch gekennzeichnet, dass** das Verschlusselement (4) am genannten oberen Rand einen nach aussen ragenden Flansch (8) aufweist und dass die flächige Verbindungsstelle (28) durch eine Stirnseite (14) dieses Flansches (8) gebildet ist.

14. Verschlussmatte nach Anspruch 12 oder 13, **dadurch gekennzeichnet, dass** die Verschlusselemente (4) aus Polypropylen oder Polyäthylen und der flächige Träger (3) aus einem thermoplastischen Elastomer hergestellt sind.

15. Verschlussmatte nach einem der Ansprüche 12 bis 14, **dadurch gekennzeichnet, dass** der flächige Träger (3) und die Verschlusselemente (4) aus unterschiedlichen aber artverwandten Kunststoffen hergestellt sind.

16. Verschlussmatte nach einem der Ansprüche 12 bis 15, **dadurch gekennzeichnet, dass** der flächige Träger (3) aus SEBS oder SBS und die Verschlusselemente aus EVA hergestellt sind.

17. Verschlussmatte nach einem der Ansprüche 12 bis 16, **dadurch gekennzeichnet, dass** die Verschlusselemente (4) jeweils an der Oberseite eines Bodens (11) einen Nocken 31 aufweisen, an welchem das Verschlusselement (4) gefasst und vom Probenbehälter (2) abgezogen werden kann.

## Claims

1. Method of producing a sealing mat (1) having a carrier sheet (3) on which are arranged multiple sealing elements (4), each being provided for sealing a test tube (2), **characterized in that** the carrier sheet (3) and the sealing elements (4) are made of different materials in the same injection die mold (21) by two-component injection molding, and the carrier sheet (3) is thus detachably joined to the sealing elements (4) by adhesion.

2. Method as claimed in Claim 1, **characterized in that** the carrier sheet (3) and the sealing elements (4) are made of related plastics.

3. Method as claimed in Claim 1 or 2, **characterized in that** each sealing element has a flange (8) projecting outward on an upper edge, the carrier sheet (3) being integrally molded onto this flange.

4. Method as claimed in Claim 3, **characterized in that** the flange (8) has an upper surface (14) onto which the carrier sheet (3) is integrally molded.

5. Method as claimed in any one of Claims 1 through 4, **characterized in that** the carrier sheet (3) is made of a thermoplastic elastomer.

6. Method as claimed in any one of Claims 1 through 4, **characterized in that** the carrier sheet (3) is made of silicone rubber.

7. Method as claimed in any one of Claims 1 through 4, **characterized in that** the carrier sheet (3) is made of SEBS or SBS.

8. Method as claimed in any one of Claims 1 through 4, **characterized in that** the sealing elements (4) are made of polypropylene or polyethylene.

9. Method as claimed in any one of Claims 1 through 7, **characterized in that** the sealing elements (4) are made of EVA.

10. Method as claimed in any one of Claims 1 through 9, **characterized in that** the bonding strength between the carrier sheet (3) and one of the sealing elements (4) is essentially greater than the holding force of a sealing element (4) in a test tube (2).

11. Method as claimed in any one of Claims 1 through 10, **characterized in that** first the sealing elements (4) are injected and then the carrier sheet (3) is injected.

12. Sealing mat produced by the method as claimed in Claim 1, **characterized in that** the sealing elements (4), which are made by injection molding and are molded onto the carrier sheet, each has a flat connection (28) on the upper edge, where the sealing (4) is detachably joined to the carrier sheet (3) by adhesion, which carrier sheet (3) is made by injection molding, wherein the connection between the carrier sheet (3) and the sealing elements (4) is solely based on an adhesive force of the flat connection (28).

13. Sealing mat as claimed in Claim 12, **characterized in that** the sealing element (4) has a flange (8) protruding outward on said upper edge and the flat connection (28) is formed by an end face (14) of this flange (8).

14. Sealing mat as claimed in Claim 12 or 13, **characterized in that** the sealing elements (4) are made of polypropylene or polyethylene and the carrier sheet (3) is made of a thermoplastic elastomer.

15. Sealing mat as claimed in any one of Claims 12 through 14, **characterized in that** the carrier sheet (3) and the sealing elements (4) are made of different but related plastics.

16. Sealing mat as claimed in any one of Claims 12 through 15, **characterized in that** the carrier sheet (3) is made of SEBS or SBS and the sealing elements are made of EVA.

17. Sealing mat as claimed in any one of Claims 12 through 16, **characterized in that** each sealing element (4) has a nose (31) on the top side of a bottom (11) on which the sealing element (4) can be gripped and pulled away from the test tube (2).

## Revendications

1. Procédé de fabrication d'une couverture de fermeture (1) comportant un support (3) plat au niveau duquel une pluralité d'éléments de fermeture (4) sont disposés pour fermer respectivement un récipient d'essai (2), **caractérisé en ce que** le support (3) plat et les éléments de fermeture (4) sont fabriqués à partir de matières différentes dans le même outil de moulage par injection (21) bi-composant et que le support (3) plat est ainsi relié de façon amovible aux éléments de fermeture (4) par adhésion.

2. Procédé selon la revendication 1, **caractérisé en ce que** le support (3) plat et les éléments de fermeture (4) sont fabriqués à partir de plastiques apparentés.

3. Procédé selon la revendication 1 ou 2, **caractérisé en ce que** les éléments de fermeture comportent respectivement au niveau d'un bord supérieur une bride (8) saillant vers l'extérieur au niveau de laquelle le support (3) plat est injecté.

4. Procédé selon la revendication 3, **caractérisé en ce que** la bride (8) comporte une surface supérieure (14) au niveau de laquelle le support (3) plat est injecté.

5. Procédé selon l'une quelconque des revendications 1 à 4, **caractérisé en ce que** le support (3) plat est fabriqué à partir d'un élastomère thermoplastique.

6. Procédé selon l'une quelconque des revendications 1 à 4, **caractérisé en ce que** le support (3) plat est fabriqué à partir de caoutchouc de silicone.

7. Procédé selon l'une quelconque des revendications 1 à 4, **caractérisé en ce que** le support (3) plat est fabriqué en SEBS ou en SBS.

8. Procédé selon l'une quelconque des revendications 1 à 4, **caractérisé en ce que** les éléments de fermeture (4) sont fabriqués en polypropylène ou en polyéthylène.

9. Procédé selon l'une quelconque des revendications 1 à 7, **caractérisé en ce que** les éléments de fermeture (4) sont fabriqués en EVA.

10. Procédé selon l'une quelconque des revendications 1 à 9, **caractérisé en ce que** la solidité de la liaison entre le support (3) plat et un des éléments de fermeture (4) est sensiblement plus importante que la force de tenue d'un élément de fermeture (4) placé dans un récipient d'essai (2).

11. Procédé selon l'une quelconque des revendications 1 à 10, **caractérisé en ce que** les éléments de fermeture (4) sont d'abord injectés, suivis du support (3) plat.

12. Couverture de fermeture, fabriquée selon le procédé selon la revendication 1, **caractérisée en ce que** les éléments de fermeture (4) fabriqués par moulage par injection et injectés au niveau du support (3) plat comportent respectivement au niveau d'un bord supérieur un point de jonction (28) plat au niveau duquel l'élément de fermeture (4) est relié de façon amovible, par adhésion, au support (3) plat fabriqué par moulage par injection et que les jonctions entre le support (3) plat et les éléments de fermeture (4) reposent seulement respectivement sur la force d'adhésion du point de jonction (28) plat.

13. Couverture de fermeture selon la revendication 12, **caractérisée en ce que** l'élément de fermeture (4) comporte au niveau dudit bord supérieur une bride (8) saillant vers l'extérieur et que le point de jonction (28) plat est formé à travers une face frontale (14) de cette bride (8).

14. Couverture de fermeture selon la revendication 12 ou 13, **caractérisée en ce que** les éléments de fermeture (4) sont fabriqués en polypropylène ou en polyéthylène et que le support (3) plat est fabriqué à partir d'un élastomère thermoplastique.

15. Couverture de fermeture selon l'une quelconque des revendications 12 à 14, **caractérisée en ce que** le support (3) plat et les éléments de fermeture (4) sont fabriqués à partir de plastiques différents mais apparentés.

16. Couverture de fermeture selon l'une quelconque des revendications 12 à 15, **caractérisée en ce que** le support (3) plat est fabriqué en SEBS ou en SBS et que les éléments de fermeture sont fabriqués en EVA.

17. Couverture de fermeture selon l'une quelconque des revendications 12 à 16, **caractérisée en ce que** les éléments de fermeture (4) comportent respectivement, au niveau du côté supérieur d'un plancher (11), une came (31) au niveau de laquelle l'élément de fermeture (4) peut être agrippé et retiré du récipient d'essai (2).
